# EUROPEAN PATENT SPECIFICATION

(11) **EP 2 607 938 B1**
(45) Date of publication and mention of the grant of the patent: **25.02.2015**
(21) Application number: 12198905.7
(22) Date of filing: 21.12.2012
(51) Int. Cl.: G02B 6/44, G02B 6/50, H02G 9/10

(54) **Method and system for installing part of a communication network, as well as a communication network**
Verfahren und System zur Installation eines Kommunikationsnetzwerks sowie ein Kommunikationsnetzwerk
Procédé et système pour installer une partie d'un réseau de communication, ainsi qu'un réseau de communication

(30) Priority: 21.12.2011 NL 2008004
(43) Date of publication of application: 26.06.2013
(73) Proprietor: Draka Comteq B.V., 1083 HJ Amsterdam (NL)
(72) Inventor: van Trigt, Bastiaan Cornelis, 1083 HJ Amsterdam (NL); Zeng, Jianming, 1083 HJ Amsterdam (NL); Doorn, Mijndert, 1083 HJ Amsterdam (NL)
(74) Representative: Jansen, Cornelis Marinus

(56) References cited:
- WO-A1-95/07477
- WO-A2-2007/019158
- US-B1- 6 829 424

## Description

The invention relates to a method for installing part of a communication network.

Installation of communication network parts, for example optical fibre communication cables, can involve laying at least part of the network underground. Usually, at certain locations, various communication lines have to be interconnected, for transmission of communication signals between those communication lines, for example at branching points and/or network extension points.

For example, WO9507477 discloses the mounting of a node in a footway box (F)._

US6829424 shows in Fig. 14 an in-line cable closure (61), including a metallic protective housing (64) embedded in concrete (65).

WO2007/019158 shows, in Fig. 5, a flexible cover separate from a tray in the form of a shield or bag that encompasses a splice tray and optionally could be sealed with an opaque adhesive.

Generally, a dedicated connection unit, for example a splicing cassette, is applied for containing one or more line connections between a number of communication lines. It is known to use a handhole in case such connections are to be located underground. The known handhole is a rigid box configured for containing the connection unit (enclosing one or more connections between communication lines), and also containing excess length of the respective communication lines. The known handhole box is configured for providing hollow underground chamber.

During installation, the known rigid handhole box is located in a ditch in the ground (the ditch for example having a depth of about 0.5 to 1 meter below ground surface level). A communication line that is to be interconnected with another communication line (e.g. for branching and/or extension purposes) may already be located in the ground (and enter the handhole ditch) before interconnection, and/or the communication line may be interconnected with another communication line before being buried. In each case, end sections of the communication lines can be led into the rigid handhole box via respective entry ports of the box.

It is a common procedure to make the desired connections between the communication lines remote from the ditch that is to receive or already contains the rigid handhole box, to facilitate the making of durable and reliable interconnections. For example, the connection unit can be held at a relatively clean, dirt-free location near the ditch (above ground level, e.g. in a technician's service area, for example in a service vehicle), when the connections are made.

After the connections have been made, the connection unit can be closed (e.g. hermetically sealed), and can be laid into the handhole box. Excess length sections of respective communication lines can be coiled into the handhole box as well. After that, the handhole box is closed and buried.

In case line connections are to be added, removed or changed, an operator can uncover the buried handhole box and open the box, gaining access to its relatively broad interior space and the connection unit therein.

The known configuration has several disadvantages. Firstly, the known handhole box is relatively large, thereby requiring large storages and transport volumes before being used in the field. Also, the known handhole box requires a relatively expensive rigid, sturdy structure to maintain its handhole volume without e.g. cracking under loading and impact (e.g. from above and from the sides) after being buried. Furthermore, the known handhole box may have to include additional measures to stably position network components (e.g. an above-mentioned connection unit) therein, to avoid movement of such components in the box's internal space after the assembly has been buried.

The present invention aims to solve or at least alleviate the above-mentioned problems. Particularly, the invention aims to provide an improved network installation method and system

According to an aspect of the invention, to this aim, a method for installing part of a communication network is characterised by the features of claim 1.

Particularly, an aspect of the invention provides a method, including connecting at least two communication lines, enclosing the resulting connection in a rigid enclosure, and enclosing the rigid enclosure in a flexible enclosure, and deforming the flexible enclosure.

As a result, a relatively inexpensive, reliable configuration can be applied for connecting the communication lines, requiring relatively small storage and transport volumes compared to the known configuration. Besides, in this way, no dedicated positioning means are required for positioning the rigid enclosure with respect to an outer enclosure, particularly in the case of burying the resulting assembly of enclosures.

The flexible enclosure is particularly configured such (i.e. has a flexibility, deformability or bendability, such) that it does not irreversibly damage or crack when it is deformed.

Regarding the term "rigid enclosure", it should be noted that in this application, rigid enclosure can be construed as an enclosure that maintains its volume substantially without cracking under loading and impact, particularly a loading from above and from the sides, after being buried underground. Particularly, the rigidity of the rigid enclosure can be such that the rigid enclosure can not be deformed between a flat state (in which the enclosure enclosures substantially no internal volume) and an installation state (in which the enclosure does enclose an internal installation volume), without damaging or cracking that enclosure. Particularly, the rigid enclosure may be rigid such that it inherently resists any deformation thereof, particularly any volume change inducing deformation.

Regarding the term "flexible enclosure", it should be noted that in this application, flexible enclosure can be construed as an enclosure that can be easily deformed to change its volume without substantially damaging that enclosure, particularly a deformation between a first (e.g. flat) state wherein the enclosure encloses no internal volume, and an initial installation state for providing an internal volume for receiving the rigid enclosure. The flexibility of the flexible enclosure can be such that the enclosure substantially does not resist such deformation, and for example such that it can remain in its deformed state by itself.

For example, as follows from the above, in this application, a flexibility of the flexibility enclosure is significantly higher than a flexibility -if any- of the rigid enclosure (with "flexible" meaning" flexing or deforming the enclosure between two states, e.g. flat and upstanding, without irreversibly damaging the enclosure), as will be appreciated by the skilled person.

Particularly, a said rigid enclosure can be a dedicated rigid connection unit, configured for containing one or more line connections between a number of communication lines. It has been found that such a rigid connection unit can be sufficient for protecting relatively sensitive connections between the communication lines from an external influences (for example mechanical forces, and optionally liquids that might deteriorate the connections).

The flexible enclosure as such may be named a "soft handhole". The flexible enclosure as such can be configured in various ways. In a further embodiment, the flexible enclosure is a flexible container. The flexible enclosure can e.g. be a flexible bag or a flexible box.

In one embodiment, the flexible enclosure can be substantially made of a flexible plastic. In a preferred embodiment, the flexible enclosure can be substantially made of a woven material, for example a woven textile material, so that a relatively strong, durable and inexpensive configuration is achieved. Also, preferably, the flexible enclosure can mainly consist of flexible sheet or web material.

The flexible enclosure does not have to uphold a relatively large internal volume during use. Particularly, after having received the rigid enclosure (and e.g. excess communication line length), it can simply deform from an initial state inwardly towards the rigid enclosure, such that external mechanical loading can be primarily taken up by the internal rigid enclosure.

For example, the flexible enclosure can be configured to be deformed (particularly without damaging the flexible enclosure) towards an initial installation state wherein that enclosure defines an inner space/volume that is significantly larger than the external shape of the rigid enclosure. As a result, a relatively large excess space can be present between the flexible outer enclosure and the rigid inner enclosure. For example, the flexible enclosure can be adjustable to a state providing an inner volume that at least 10% larger than a volume of an external shape of the rigid enclosure (wherein the adjusting or volume change does not lead to irreversible damage to the flexible enclosure). A difference in volume (said excess space) can e.g. be used partly for storing above-mentioned excess communication line lengths. The flexible enclosure is then preferably configured to be deformed from said an initial installation state towards a second state wherein said excess space is reduced. For example, an upper side of the flexible enclosure may be remote from the rigid enclosure (located in the flexible enclosure) when the flexible enclosure is in its initial installation state, wherein the upper side of the flexible enclosure mechanically contacts the rigid enclosure when the flexible enclosure is in said second state.

In a preferred embodiment, the flexible enclosure is positioned in a hole in the ground, to be buried underground.

Thus, the flexible enclosure can be configured to substantially shield its content (being at least the rigid enclosure and optionally said excess communication line length) from ground material (for example soil, sand, mud, et cetera). In case local line operations are desired, the flexible enclosure can be uncovered (i.e. by digging up the flexible enclosure), to be deformed back towards an initial state providing access to the rigid enclosure. The rigid enclosure can then be removed from the flexible enclosure, and is ready for handling (being relatively dirt-free).

The flexible enclosure can contain the rigid enclosure and may optionally contain excess length of respective communication lines that are interconnected using the rigid enclosure. In a preferred embodiment, part of at least one of the communication lines is at least partly looped into the flexible enclosure. For example, the communication lines can be optical fibre communication cables, configured for transmitting optical communication signals. Excess length of optical fibre communication cables can be gently looped within the flexible enclosure to prevent damage thereto.

In a preferred embodiment, the flexible enclosure can be deformed towards a substantially flat storage and/or transport condition. In that case, the flexible enclosure can be deformed from the substantially flat condition towards an initial installation state, providing an internal volume for receiving the rigid enclosure.

Also, an aspect of the invention provides a system for installing part of a communication network, for example to be used in a method according to the invention. Advantageously, the system includes a rigid enclosure for enclosing a connection between communication lines, as well as a flexible enclosure for enclosing the rigid enclosure, the flexible enclosure having at least one flexible wall, providing a flexible handhole.

Thus, above-mentioned advantages can be achieved. In a further embodiment, the flexible enclosure can include at least a flexible side wall, extending from a bottom wall, the flexible side wall defining an interior space for receiving the rigid enclosure. A flexibility of the side wall can be such that the side wall can be deformed, for example folded, without irreversibly damaging that wall.

The rigid enclosure can include rigid walls. All walls of the rigid enclosure can be made of rigid material, i.e. such that the walls can be not deformed or reshaped without irreversibly damaging the rigid enclosure.

Also, in a further embodiment, the flexible enclosure can at least include a side wall, extending from a bottom wall, the side wall surrounding a space for receiving the rigid enclosure, wherein the side wall is configured to reach higher than a level of a top side of the rigid enclosure when the rigid enclosure is located in the flexible enclosure. All walls of the flexible enclosure can be made of flexible material, i.e. such that the walls can be deformed or reshaped, thereby adjusting a volume of that enclosure, without irreversibly damaging the flexible enclosure.

The flexible enclosure can be configured in various ways to gain access to its interior space (i.e. for opening the enclosure). For example, the flexible enclosure can be a flexible bag, having an upper or neck portion that can be tied together for closing a respective bag opening. Also, the flexible enclosure can include a removable covering, for example a flexible covering. In each case, a relatively simple and inexpensive releasable connection means can be provided for holding the enclosure in a closed condition, for example an elongated flexible attachment member, for example a belt, a string, a cord or a rope.

Further, an aspect of the invention provides a communication network, including a number of communication lines, particularly fibre optical cables, being substantially buried underground, wherein the network includes at least one system according to the invention, the system being buried underground, with at least one connection between communication lines being located in the said rigid enclosure, the rigid enclosure being located in the flexible enclosure. For example, the flexible enclosure may be located below a local ground surface level, the flexible enclosure particularly being deformed in height, the flexible enclosure preventing ambient ground material, for example sand, mud or soil, reaching the rigid enclosure.

Further advantageous embodiments of the invention are described in the dependent claims. The invention will now be explained referring to a non-limiting embodiment depicted in the drawings. Therein shows, schematically:
Figure 1 a side view of a flexible enclosure according to an embodiment of the invention;
Figure 2 a top view of a lower section of the flexible enclosure shown in Fig. 1;
Figure 3 a bottom view of an upper, covering, section of the flexible enclosure shown in Fig. 1;
Figure 4 a top view of a first step of a method according to an embodiment of the invention, utilizing a flexible enclosure as shown in Figures 1-3;
Figure 5 a top view of a second step of a method according to an embodiment of the invention;
Figure 6 an opened up side view of a third first step of a method according to an embodiment of the invention; and
Figure 7 an opened up side view of a fourth first step of a method according to an embodiment of the invention.

Similar or corresponding features are denoted by similar or corresponding reference signs in this patent application.

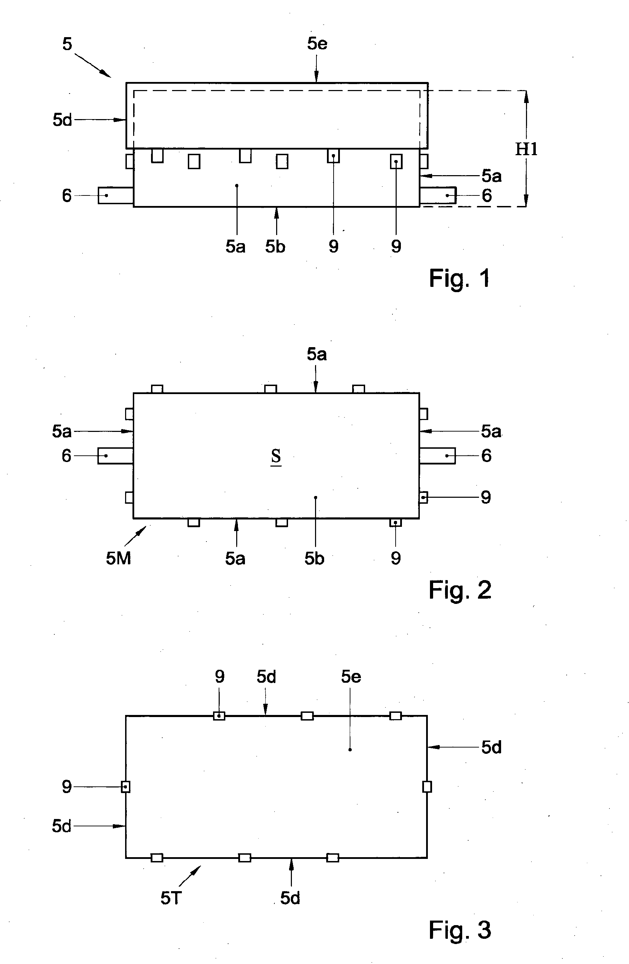

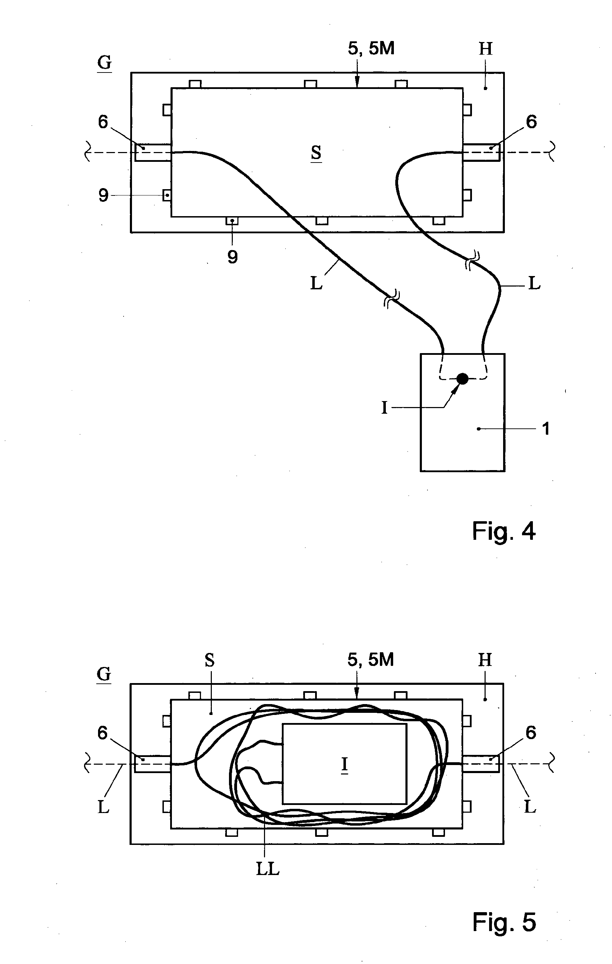

Figures 1-3 show a non-limiting example of a flexible enclosure 5 of a system for installing part L of a communication network. Use of the flexible enclosure, in combination with a rigid enclosure 1 and communication lines L (usually having a flexible or bendable configuration), is show in figures 4-7.

The flexible enclosure 5 is configured for enclosing the said rigid enclosure 1. The rigid enclosure 1, which is shown in each of Figures 4-7, is designed for enclosing one or more local communication connections I between communication lines L.

In the present drawings, only two such communication lines L and a respective connection I (see Fig. 4), are schematically shown. The skilled person will appreciate that there can be provided more such communication lines L, having respective connections I.

In a further embodiment, the communication lines L of the network are optical communication lines L, particularly containing optical fibers, for transmission of optical communication signals. A local communication connection I between such communication lines L (particularly between end sections of the lines L) may for example be a fused type interconnection I, also known as a fusion splice, or a connection using dedicated optical connectors, a different type of connection.

The skilled person will appreciate that the communication lines L as such can be configured in various ways. For example, a communication line L can be a cable, containing one or more (optical) signal conductors (e.g. optical fibers), or differently. In a further embodiment, at least part of the communication line L can be laid underground in a protective elongated enclosure, for example a hollow duct.

The rigid enclosure 1 for containing the line connection(s) I as such can be configured in various ways, and is known as such to the skilled person.

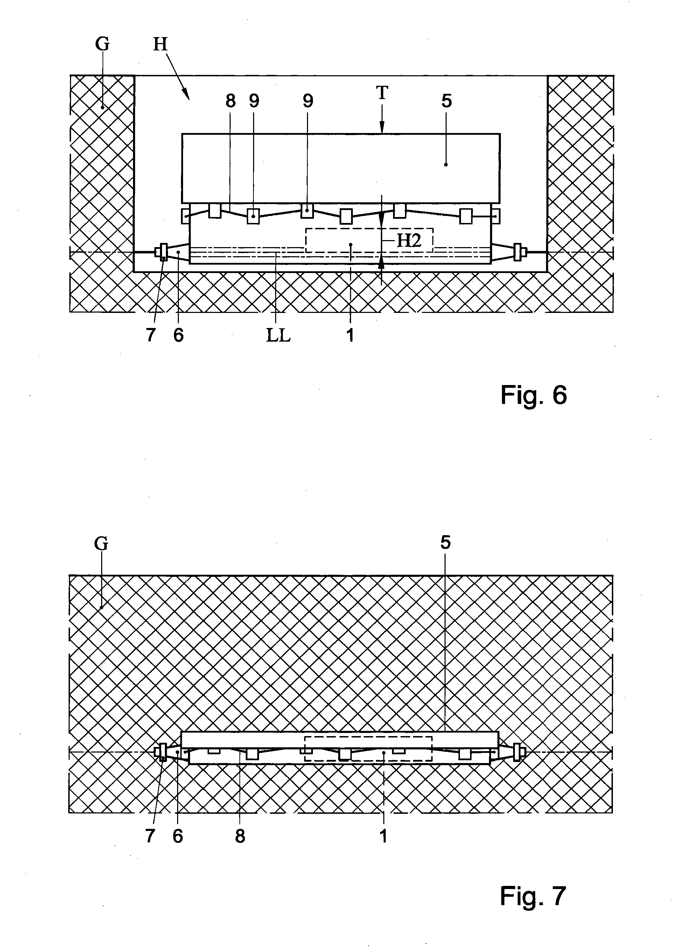

The rigid enclosure 1 can include rigid walls, made of a rigid material, for example rigid plastic, wood, metal plates or differently. All walls of the rigid enclosure can be made of rigid material, i.e. such that the walls can be not deformed or reshaped without irreversibly damaging the rigid enclosure. Particularly, the rigid enclosure 1 can be configured as a sturdy structure to maintain its volume without e.g. cracking under loading and impact (e.g. from above and from the sides) after being buried (as in Fig. 7) by a mass extending there-above (e.g. a mass filling up a respective hole in the ground).

For example, the rigid enclosure 1 can be a dedicated line connection unit, a splicing cassette, or a patch box, or another type of rigid enclosure. After installation, the rigid enclosure 1 encloses said one or more communication line connection(s) I, preferably for protecting those connection(s) I (see Fig. 4-7). The rigid enclosure 1 can be configured for shielding the line connection(s) I from liquid that might emanate from an environment, e.g. water, rain water and/or ground water.

In a further embodiment, the rigid enclosure 1 can be configured to be opened for gaining access to line connection(s) I present therein, and/or for providing new line connection(s) I present therein. In that case, preferably, the rigid enclosure 1 can be (hermetically) closed again, after respective line operations have been carried out, for shielding the line connection(s) from an environment.

The flexible enclosure 5, for enclosing the said rigid enclosure 1, can be configured in various ways, as will be appreciated by the skilled person. A non-limiting example is shown in the drawings.

In a further embodiment, flexible enclosure 5 is configured for loosely receiving a said rigid enclosure 1. For example, the present flexible enclosure 5 does not have to include dedicated attachment and/or positioning means for connecting and/or positioning the rigid enclosure 1 therein.

According to a further embodiment, the flexible enclosure 5 is partly flexible. According to another embodiment, the flexible enclosure 5 can be entirely flexible. Particularly, the flexible external enclosure 5 has a flexibility such that the enclosure 5 can be deformed between a number of shapes, thereby changing the volume of the enclosure 5.

For example, in a further embodiment, the flexible enclosure 5 can be configured to be deformed from an initial state, enclosing a first volume V1, to a collapsed state, enclosing a second volume V2, wherein the size of the first volume V1 is at least 1.1 times the size of the second volume, for example at least 2 times, for example at least 10 times. In yet a further embodiment, the flexible enclosure 5 can be collapsed to a compact transport and/or storage condition, wherein the size of the volume of the interior space of the enclosure 5 is substantially zero (m³).

In one embodiment, changing the shape (deforming) of the enclosure 5 from an expanded form (e.g. an initial installation state) to a second form with a smaller volume can be achieved entirely by gravity. In that case, e.g., the enclosure 5 can be held in the expanded form using additional measures and/or by service personnel.

Also, according to an embodiment, changing the shape (deforming) of the enclosure 5 from an expanded form (e.g. an initial installation state) to a second form with a smaller volume can not achieved entirely by gravity. In that case, e.g., the enclosure 5 can maintain itself in the expanded form. Inn that case, an external force, additional to gravity, can be applied to deform the enclosure 5 to shape having the smaller interior volume (compared to its interior volume when the enclosure is in the expanded form). In the non-limiting example shown in the Figures, e.g. there can be provided a flexible enclosure 5 that can remain erect, in an expanded initial state, by itself (see Figures 1, 6), wherein the flexible enclosure 5 can be pressed downwardly to a second shape (see Fig. 7), for example by a mass extending there-above and filling up a respective hole in the ground.

The flexible enclosure 5 can be a flexible bag. Also, the flexible enclosure 5 can be a flexible container or a flexible box.

Besides, the flexible enclosure 5 can have various shapes, when it is in an initial installation state (e.g. an expanded state, shown in Figures 1 and 6). Said initial installation state may e.g. be state wherein the enclosure 5 has been expanded to a maximum possible size, without damaging the enclosure 5, but that is not required. Also, the flexible enclosure 5 can be configured to provide various, i.e. at least two different, expanded initial installation states (e.g. providing mutually different internal installation volumes for receiving a said internal rigid enclosure 1).

For example, the flexible enclosure 5 can be substantially parallelepiped, cuboid or rectangular cuboid, as in the non-limiting example, with four lateral sides extending between a bottom and a top. However, the flexible enclosure 5 can also have another shape when it is in an initial installation state, for example with a bottom, a top, and three or more than four lateral sides. Also, the flexible enclosure 5 can have only one or more curved sides, or only curved sides, when it is in an initial installation state. The flexible enclosure 5 can have a spherical, cylindrical or otherwise curved shape, in its initial installation state.

It follows that the flexible enclosure 5, for enclosing the rigid enclosure 1, can include at least one flexible wall, for providing a flexible handhole (e.g. a "soft handhole").

In an embodiment, the flexible enclosure 5 can mainly consist of flexible sheet or web material. For example a bottom 5b, side wall(s) 5a and optional covering 5T can be made of sheet material or web material.

The flexible enclosure 5 can be substantially made of flexible plastic. Also, the flexible enclosure 5 can be substantially made of a flexible woven material. Further, the flexible enclosure 5 can be substantially made of a flexible textile. A woven textile material has been found to provide good results, and achieved sand- and dirt-shielding in an efficient manner. In a further embodiment, all walls 5a, 5b, 5c of the flexible enclosure consist or mainly consist of a said flexible material. Besides, in a further embodiment, at least one of these walls, for example all the walls 5a, 5b, 5c, can water-permeable walls.

In a further advantageous embodiment, the flexible enclosure 5 is substantially flexible, so that it can be deformed to a substantially flat storage and/or transport condition.

Also, in a preferred embodiment, the flexible enclosure 5 has a water-permeable configuration, and can for example be partly or substantially made of water-permeable material. Also, the flexible enclosure 5 can include one or more openings or slits allowing passage of water into and out of that enclosure 5.

In a further example, the flexible enclosure 5 at least includes a side wall 5a (four such side walls 5a, in the depicted example), extending upwardly from a bottom wall 5b, the flexible side wall 5a and bottom 5b being configured for defining an interior space S for receiving the rigid enclosure 1. Each side wall 5a can be a flexible side wall 5a. In this example, the side wall 5a is configured to reach higher than a level of a top side of the rigid enclosure 1 when the rigid enclosure is located in the flexible enclosure 5 (see Fig. 6), particularly when the enclosure is in an initial installation state. Thus, in this example, a height H1 of the side wall 5a can be higher than a height H2 of a respective rigid enclosure 1 that is to be contained. Also, in a further non-limiting embodiment, a surface area of a bottom wall 5b of the flexible enclosure 5 can be significantly larger than a bottom surface area of a rigid enclosure 1 that is to be contained.

In a further example, a bottom wall 5b of the flexible enclosure is flexible, e.g. being made of a said flexible material. Alternatively, the flexible enclosure 5 can include a rigid bottom.

According to a further embodiment, the flexible enclosure 5 can be adjustable to a state having an inner volume that at least 10% larger than a volume of an external shape of the respective rigid enclosure 1 that is to be received.

In a further embodiment, that is advantageous from an economical point of view, the one or more side walls 5a and bottom wall 5b of the flexible enclosure 5 can be made integrally, for example in once piece, and for example of the same material. These wall sections 5a, 5b can provide a main part 5M of the flexible enclosure (the main part 5M surrounding the interior space S for receiving a said rigid enclosure).

The flexible enclosure 5 may include a dedicated covering or cap 5T that can be moved/adjusted from a first position, covering the interior of the enclosure 5, to a second position providing access to the enclosure's interior space S (the access being via an open top side of the enclosure's main part 5M).

An example of such an enclosure 5, having an adjustable covering 5T, is shown in Figures 1-7. The covering 5T can e.g. be pivotally coupled to the main part 5M, or detachably, or in another manner to provide adjustment between the first and second position. In a further embodiment, the covering 5T as such can be flexible, for example being entirely made of flexible material(s). Also, for example, the covering 5Tcan be made of the same material or materials as other parts of the enclosure 5, such as a said side wall 5a and/or bottom wall 5b.

In the present exemplary embodiment, the covering 5T is provided with side walls 5d, extending downwardly from a covering's top wall 5e, for engaging the side walls 5a of the main section 5M. Particularly, the present covering 5T can enclose an upper edge of the man section 5M.

Also, releasable connection means can be provided for releasingly attaching the covering 5T (for example a side wall or side walls thereof) to the at least one side wall 5a of the main section 5M of the flexible enclosure. Such releasable connection means can be configured in various ways, and can include one or more of: clamping means or clamps, locking means, a zipper, bottom means, hooks, fabric hook-and-loop fasteners (e.g. Velcro™), or other connecting means.

In the depicted example, the connecting means include an elongated flexible attachment member 8 (see Figures 6-7), for example a belt, a string, a cord or a rope. Also, the covering 5T and the main section 5M of the flexible enclosure are both provided with guiding parts 9, e.g. loop elements, for guiding the attachment member 8 at least partly around (preferably entirely around) the covering 5T and the main section 5M, to hold the covering 5T and main section 5M together.

In another embodiment, the flexible enclosure does not include a dedicated adjustable covering. In that case, e.g., the flexible enclosure can be configured to provide a flexible upper section that can be adjusted between an open and a closed state. An example can be a bag-type flexible enclosure, wherein the bag can be releasibly closed at or near the bag's main opening, e.g. by tying the respective bag section together.

In a further embodiment, the flexible enclosure 5 can have at least one entry port for receiving a said communication line. In a preferred embodiment, such an entry port has an adjustable, internal, width. For example the entry port can be a (substantially) flexible section 6 of the flexible enclosure. In an alternative embodiment, one or more of the entry ports 6 do not have an adjustable, internal, width.

The example shown in the drawings is provided with two such entry ports 6. Also, in the present example, the entry ports 6 are provided in the at least one side wall 5a of the flexible enclosure 5. It will be appreciated that a different number of entry ports 6 can be provided, e.g. only one or more than two. Also, one or more of the entry ports 6 can be located at/in other sections of the flexible enclosure 5, for example in a bottom wall 5b and/ or a covering 5T.

Each of the entry ports 6 can have different configurations. In an embodiment, a said entry port can include a tubular entry port. A said entry port can enclose a passage for passing one or more communication lines L from an environment into the interior space S of the flexible enclosure 5.

Adjustment of the width of a said entry port 6 can for example be achieved by providing an flexible entry port 6, for example being made of a flexible material. In a further embodiment, a said (flexible) entry port can be made in one piece with a respective (flexible) wall section of the flexible enclosure.

In a further embodiment, there can be provided a closing means or structure 7 for holding an entry port 6 in an adjusted, particularly narrowed, state, for example a closed state or a state wherein one or more communication lines L are fed through that port 6. Such a means or structure can include one or more of: a clamp, a wrapping structure, a rope, a wire, a tie-wrap, or a different connection or coupling structure, as will be appreciated by the person skilled in the art.

Figures 4-7 schematically depict various steps of installing a part of a communication network. The method may include the use of an above-described example of a said flexible (outer) enclosure 5, as in the following, or a different type of flexible enclosure.

A method for installing part of a communication network can including, in a arbitrary order: connecting at least two communication lines L, enclosing the resulting connection in a rigid enclosure 1, positioning a flexible enclosure in a hole H in the ground G, positioning the rigid enclosure in the flexible enclosure 5.

As follows from Figure 4, there can be provided a hole (i.e. a pit, ditch) H in the ground G, for receiving the assembly of enclosures S, 1. A depth of such a hole H can be in the range of about 20 to 100 cm below ground surface level, for example a range of about 30 to 70 cm, or another depth. One or more of the communication lines L can already be buried, emanating into the pit H (to be connected), but that is not required.

In the example, a bottom surface of the hole H in the ground can provide a supporting surface for supporting (a bottom wall 5b of) the flexible enclosure 5. In a further embodiment, in case the flexible enclosure 5 is provided with a flexible bottom wall 5b, that wall 5b can adjust to the shape of the supporting surface.

The communication lines L can be passed through at least one entry port 6 of the flexible enclosure 5. This can be done e.g. before or after the flexible enclosure 5 has been laid into the hole H in the ground.

An internal width of a or each entry port 6 can optionally be adjusted to an external width of the communication line or communication lines L, passed there through, for snuggingly fitting thereon. Optionally, this can be achieved by a said closing means or structure 7. In addition or alternatively, there can be provided a sealing structure, for example a sealing material, for closing a gap or slit between an inner side of an entry port 6 and an outer side of a respective communication line L (passing that port 6). It should be noted that a respective sealing at an entry port 6 does not have to be a hermetical, e.g. water tight, sealing.

As is shown in Fig. 4, preferably, the connection I between the communication lines L is made remote from the location of the hole H in the ground. For example, such connection I is made in a local clean environment, above ground level, e.g. in a technician's service area, for example in a service vehicle. After the connection I has been made, the connection I is located in the rigid enclosure 1, the rigid enclosure preferably being hermetically sealed to shield the connection I from external, potentially harmful influences.

The rigid enclosure 1 can be laid into the open flexible enclosure 5 (an optional covering 5T being removed), for example before or after the flexible enclosure 5 is laid into the hole H in the ground.

Optionally, part of at least one of the communication lines L can be at least partly looped into the flexible enclosure 5, e.g. in an area between the rigid enclosure 1 and the flexible enclosure 5, before closing and burying the flexible enclosure 5. Looped sections of the communication lines L are indicated by reference sign LL in Figures 5 and 6. These sections can e.g. be local excess length sections of the communication lines L. In an embodiment, such an excess length section of a communication line L can be relatively long, e.g. having a length in the range of about 1 to 10 meters.

Further, the method may include burying the flexible enclosure 5 after having received the rigid enclosure 1, and deforming the flexible enclosure 5 after having received the rigid enclosure 1. The burying and deforming may be carried out in the same step (i.e. the burying leads to the deforming), but that is not required. For example the flexible enclosure 5 can be deformed at least partly prior to being buried underground.

The one or more side walls 5a of the flexible enclosure 5 may e.g. remain upstanding by themselves, before the respective enclosures assembly 1, 5 is being buried. Alternatively, the side wall(s) may deform or collapse, e.g. under gravitation force, prior to burying the assembly 1, 5, and preferably after having closed the access to the enclosure's interior space.

Also, in a preferred embodiment, an access opening of the flexible enclosure 5 can be closed after having received the rigid enclosure 1 and the optional (e.g. looped) excess communication line length sections. In an embodiment, a said covering 5T can be brought to a first position, covering the interior of the enclosure 5, from an earlier second position (providing access to the enclosure's interior). Figure 6 shows a resulting configuration, wherein the closed flexible enclosure 5 is also positioning in the hole H in the ground. Preferably, the covering 5T is held in place, onto the main section 5M, by a said connection means, e.g. an elongated flexible attachment member 8 cooperating with guiding parts 9 of the covering 5T and the main section 5M.

In another embodiment, such as a bag-type flexible enclosure, the closing of the flexible outer enclosure is achieved without using a dedicated covering section.

Preferably after the flexible enclosure 5 has been closed (i.e. e.g. by closing an open top side), the flexible enclosure 5 can be adjusted, particularly decreasing its interior space. The adjustment can at least include a vertically collapsing of the flexible enclosure. This is depicted in Figure 7, showing the assembly being deformed and being buried (i.e. the hole H has been filled up with filler material, for example sand, soil or other material). It should be noted that in a preferred embodiment, the flexible enclosure 5 is not an airtight enclosure and allows escape of air from its interior space during the deformation.

In the present non-limiting example, the deformation at least involves deformation (e.g. flexing or collapsing) of the side walls 5a of the flexible enclosure, thereby reducing the overall height of the flexible enclosure. The deformation may also include deformation (e.g. flexing) of other parts of the flexible enclosure, for example a bottom wall 5b and/or a top wall 5e.

In a further embodiment, the volume of the flexible enclosure 5 can be decreased after having received the rigid enclosure 1, such that both a top side/wall 5e and a bottom side/wall 5b of the rigid enclosure 1 come into (mechanical) contact with opposite inner sides of the flexible enclosure 5. As a result, the internal rigid enclosure 1 can function as a primary means for taking up external mechanical loading. The external enclosure 5 can keep the rigid enclosure 1, and the optional locally looped communication line sections LL, substantially free from ground material (e.g. sand, dirt).

For example, as has been described before, the flexible enclosure 5 can be deformed from an initial installation state (as e.g. in Fig, 6) wherein that enclosure 5 defines an inner space/volume that is significantly larger than the external shape of the rigid enclosure 1. The flexible enclosure 5 can be deformed from said initial installation state towards a second state wherein a volume of that enclosure's interior space S is reduced.

A reduction of the volume of the flexible enclosure 5 can be such that the rigid enclosure 1 becomes trapped between opposite (top and bottom) sides of the flexible enclosure 5, as in Fig. 7. The reduction can be such that there is substantially empty space (e.g. large voids) left within the flexible enclosure 1 (the interior space being substantially filled by the rigid enclosure 1 and optionally other network components such as e.g. excess length communication line sections LL).

For example, an upper side or wall T, 5e of the flexible enclosure 5 may be remote from the rigid enclosure 1 (located in the flexible enclosure) when the flexible enclosure 5 is in its initial installation state. The upper side or wall T of the flexible enclosure can mechanically contact the rigid enclosure 1 when the flexible enclosure 5 is in said second state (as in Fig. 7).

The buried assembly 1, 5 can be uncovered if desired, by removing filler material that has filled the respective hole H in the ground. After that, the flexible enclosure 5 can be opened, preferably under deformation (e.g. expansion) of that enclosure, 5 so that access to the interior network components 1, LL can be obtained without subjecting such components to ground material (e.g. sand, soil, dirt).

Thus there is provided an efficient, reliable and relatively inexpensive method and respective compact system for installing a communication network part.

In the foregoing specification, the invention has been described with reference to specific examples of embodiments of the invention. It will, however, be evident that various modifications and changes may be made therein without departing from the broader spirit and scope of the invention as set forth in the appended claims.

In the claims, any reference signs placed between parentheses shall not be construed as limiting the claim. The word 'comprising' does not exclude the presence of other features or steps then those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to advantage.

## Claims

1. Method for installing part of a communication network, including connecting at least two communication lines (L), enclosing the resulting connection in a rigid enclosure (1), positioning a flexible enclosure in a hole (H) in the ground, positioning the rigid enclosure in the flexible enclosure (5), **characterised by** burying and deforming the flexible enclosure (5) after having received the rigid enclosure, wherein the flexible enclosure (5) has a water-permeable configuration.

2. Method according to claim 1, wherein the flexible enclosure (5) is a bag, wherein the bag is deformed from a substantially flat condition towards an initial installation state, in which state the bag defines an inner volume that is significantly larger than an external shape of the rigid enclosure, wherein the deforming of the bag is carried out without irreversible damaging the bag, wherein the rigid enclosure (1) is positioned in the flexible enclosure (5) after the flexible enclosure (5) has been deformed to its initial installation state

3. Method according to claim 1 or 2, wherein part of at least one of the communication lines (L) is at least partly looped into the flexible enclosure, before burying the flexible enclosure.

4. The method according to claim 1, 2 or 3, wherein the communication lines (L) are passed through at least one entry port of the flexible enclosure, wherein a width of the entry port is preferably adjusted to a width of the communication line or communication lines, passed there through.

5. The method according to any of the preceding claims, wherein the flexible enclosure is adjustable to a state having an inner volume that at least 10% larger than a volume of an external shape of the rigid enclosure (1).

6. The method according to any of the preceding claims, wherein the flexible enclosure is laid with a respective bottom on a supporting surface, wherein the bottom adapts to a shape of the supporting surface.

7. The method according to any of the preceding claims, wherein the volume of the flexible enclosure is decreased after having received the rigid enclosure, particularly such that both a top side and a bottom side of the rigid enclosure come into contact with inner sides of the flexible enclosure.

8. A system for installing part of a communication network, for example to be used in a method according to any of the preceding claims, including a rigid enclosure (1) for enclosing a connection between communication lines (L), and a flexible enclosure for enclosing the rigid enclosure, the flexible enclosure having at least one flexible wall, providing a flexible handhole, the flexible enclosure for example being a flexible bag, **characterised in that** the flexible enclosure has a water-permeable configuration.

9. The system according to claim 8, wherein the flexible enclosure at least includes a flexible side wall, extending from a bottom wall, the flexible side wall defining an interior space for receiving the rigid enclosure.

10. The system according to claim 8 or 9, wherein the flexible enclosure at least includes a side wall, extending from a bottom wall, the side wall surrounding a space for receiving the rigid enclosure, wherein the side wall is configured to reach higher than a level of a top side of the rigid enclosure when the rigid enclosure is located in the flexible enclosure.

11. The system according to any of claims 8-10, wherein the flexible enclosure has a covering that can be moved from a first position, covering an interior of the enclosure (5), to a second position providing access to the enclosure's interior.

12. The system according to any of the claims 8-11, wherein the flexible enclosure is substantially flexible, so that it can be deformed to a substantially flat storage and/or transport condition.

13. The system according to any of claims 8-12, wherein the flexible enclosure has at least one entry port having an adjustable width, for receiving a said communication line.

14. The system according to any of claims 8-13, wherein the flexible enclosure is substantially made of water-permeable material.

15. Communication network, including a number of communication lines, particularly fibre optical cables, being substantially buried underground, wherein the network includes at least one system according to any of the claim 8-14, the system being buried underground, with at least one connection between communication lines being located in the said rigid enclosure, the rigid enclosure being located in the flexible enclosure.

## Patentansprüche

1. Verfahren zur Installation eines Teils eines Kommunikationsnetzes, umfassend das Verbinden von mindestens zwei Kommunikationsleitungen (L), das Einschließen der resultierenden Verbindung in eine starre Umhüllung (1), das Positionieren einer flexiblen Umhüllung in eine Öffnung (H) im Boden, das Positionieren der starren Umhüllung in der flexiblen Umhüllung (5), **gekennzeichnet durch** Vergraben und Verformen der flexiblen Umhüllung (5), nachdem die starre Umhüllung aufgenommen wurde, wobei die flexible Umhüllung (5) eine wasserdurchlässige Konfiguration hat.

2. Verfahren nach Anspruch 1, wobei die flexible Umhüllung (5) ein Beutel ist, wobei der Beutel von einem im Wesentlichen flachen Zustand zu einem anfänglichen Installationszustand verformt wird, in welchem Zustand der Beutel ein Innenvolumen definiert, das wesentlich größer ist als die externe Form der starren Umhüllung, wobei die Verformung des Beutels erfolgt ohne den Beutel unwiderruflich zu beschädigen, wobei die starre Umhüllung (1) in die flexible Umhüllung (5) positioniert wird, nachdem die flexible Umhüllung (5) zu ihrem anfänglichen Installationszustand verformt wurde.

3. Verfahren nach Anspruch 1 oder 2, wobei ein Teil von mindestens einer der Kommunikationsleitungen (L) mindestens teilweise in die flexible Umhüllung gewunden wird, bevor die flexible Umhüllung vergraben wird.

4. Verfahren nach Anspruch 1, 2 oder 3, wobei die Kommunikationsleitungen (L) durch mindestens einen Eingangsanschluss der flexiblen Umhüllung durchgeführt wird, wobei eine Breite des Eingangsanschlusses bevorzugt an eine Breite der Kommunikationsleitung oder Kommunikationsleitungen, die durch diesen durchgeführt werden, angepasst wird.

5. Verfahren nach einem der vorhergehenden Ansprüche, wobei die flexible Umhüllung an einen Zustand angepasst werden kann, der ein Innenvolumen hat, das mindestens 10 % größer als das Volumen einer externen Form der starren Umhüllung (1) ist.

6. Verfahren nach einem der vorhergehenden Ansprüche, wobei die flexible Umhüllung mit einem entsprechenden Boden auf eine Trägeroberfläche gelegt wird, wobei sich der Boden an die Form der Trägeroberfläche anpasst.

7. Verfahren nach einem der vorhergehenden Ansprüche, wobei das Volumen der flexiblen Umhüllung vermindert wird, nachdem die starre Umhüllung aufgenommen wurde, insbesondere so, dass sowohl eine Oberseite als auch eine Unterseite der starren Umhüllung mit Innenseiten der flexiblen Umhüllung in Kontakt kommen.

8. System zur Installation eines Teils eines Kommunikationsnetzes, zum Beispiel zur Verwendung in einem Verfahren nach einem der vorhergehenden Ansprüche, umfassend eine starre Umhüllung (1) zum Umhüllen einer Verbindung zwischen Kommunikationsleitungen (L) und eine flexible Umhüllung zum Umhüllen der starren Umhüllung, wobei die flexible Umhüllung mindestens eine flexible Wand hat, die ein flexibles Handloch bereitstellt, wobei die flexible Umhüllung zum Beispiel ein flexibler Beutel ist, **dadurch gekennzeichnet, dass** die flexible Umhüllung eine wasserdurchlässige Konfiguration hat.

9. System nach Anspruch 8, wobei die flexible Umhüllung mindestens eine flexible Seitenwand, verlaufend von einer unteren Wand, umfasst, wobei die flexible Seitenwand einen Innenraum zum Aufnehmen der starren Umhüllung definiert.

10. System nach Anspruch 8 oder 9, wobei die flexible Umhüllung mindestens eine Seitenwand, verlaufend von einer unteren Wand, umfasst, wobei die Seitenwand einen Raum zum Aufnehmen der starren Umhüllung umgibt, wobei die Seitenwand konfiguriert ist, um höher zu reichen als eine Ebene einer Oberseite der starren Umhüllung, wenn die starre Umhüllung in der flexiblen Umhüllung angeordnet ist.

11. System nach einem der Ansprüche 8-10, wobei die flexible Umhüllung einen Überzug hat, der von einer ersten Position, die ein Inneres der Umhüllung (5) bedeckt, zu einer zweiten Position, die Zugang zum Inneren der Umhüllung bietet, bewegt werden kann.

12. System nach einem der Ansprüche 8-11, wobei die flexible Umhüllung im Wesentlichen flexibel ist, sodass sie zu einem im Wesentlichen flachen Lager- und/oder Transportzustand verformt werden kann.

13. System nach einem der Ansprüche 8-12, wobei die flexible Umhüllung mindestens einen Eingangsanschluss mit einer anpassbaren Breite zum Aufnehmen der Kommunikationsleitung hat.

14. System nach einem der Ansprüche 8-13, wobei die flexible Umhüllung im Wesentlichen aus wasserdurchlässigem Material hergestellt ist.

15. Kommunikationsnetz, umfassend eine Anzahl von Kommunikationsleitungen, insbesondere Faseroptikkabel, die im Wesentlichen unterirdisch vergraben werden, wobei das Netz mindestens ein System nach einem der Ansprüche 8-14 umfasst, wobei das System unterirdisch vergraben wird, wobei mindestens eine Verbindung zwischen Kommunikationsleitungen in der starren Umhüllung angeordnet ist, wobei die starre Umhüllung in der flexiblen Umhüllung angeordnet ist.

## Revendications

1. Procédé pour installer une partie d'un réseau de communication, comprenant la connexion d'au moins deux lignes de communication (L), l'enfermement de la connexion résultante dans une enceinte rigide (1), le positionnement d'une enceinte souple dans un trou (H) dans le sol, le positionnement de l'enceinte rigide dans l'enceinte souple (5), **caractérisé par** l'enfouissement et la déformation de l'enceinte souple (5) après qu'elle a reçu l'enceinte rigide, dans lequel l'enceinte souple (5) a une configuration perméable à l'eau.

2. Procédé selon la revendication 1, dans lequel l'enceinte souple (5) est un sac, dans lequel le sac est déformé d'une condition sensiblement plate vers un état d'installation initial dans lequel le sac définit un volume intérieur qui est considérablement plus grand qu'une forme extérieure de l'enceinte rigide, dans lequel la déformation du sac est effectuée sans endommager le sac de manière irréversible, dans lequel l'enceinte rigide (1) est positionnée dans l'enceinte souple (5) après que l'enceinte souple (5) a été déformée vers son état d'installation initial.

3. Procédé selon la revendication 1 ou 2, dans lequel une partie d'au moins l'une des lignes de communication (L) forme au moins partiellement une boucle dans l'enceinte souple, avant l'enfouissement de l'enceinte souple.

4. Procédé selon la revendication 1, 2 ou 3, dans lequel les lignes de communication (L) sont passées à travers au moins un orifice d'entrée de l'enceinte souple, dans lequel une largeur de l'orifice d'entrée est de préférence ajustée à une largeur de la ligne de communication ou des lignes de communication, passées à travers celui-ci.

5. Procédé selon l'une quelconque des revendications précédentes, dans lequel l'enceinte souple est ajustable dans un état ayant un volume intérieur qui est au moins 10 % plus grand qu'un volume d'une forme extérieure de l'enceinte rigide (1).

6. Procédé selon l'une quelconque des revendications précédentes, dans lequel l'enceinte souple est disposée avec un fond respectif sur une surface de support, dans lequel le fond s'adapte à une forme de la surface de support.

7. Procédé selon l'une quelconque des revendications précédentes, dans lequel le volume de l'enceinte souple est diminué après qu'elle a reçu l'enceinte rigide, en particulier de sorte qu'un côté supérieur et un côté inférieur de l'enceinte rigide viennent tous deux en contact avec des côtés intérieurs de l'enceinte souple.

8. Système pour installer une partie d'un réseau de communication, par exemple à utiliser dans un procédé selon l'une quelconque des revendications précédentes, comprenant une enceinte rigide (1) pour enfermer une connexion entre des lignes de communication (L), et une enceinte souple pour enfermer l'enceinte rigide, l'enceinte souple comportant au moins une paroi souple, réalisant un puit de raccordement souple, l'enceinte souple étant par exemple un sac souple, **caractérisé en ce que** l'enceinte souple a une configuration perméable à l'eau.

9. Système selon la revendication 8, dans lequel l'enceinte souple comprend au moins une paroi latérale souple, s'étendant d'une paroi inférieure, la paroi latérale souple définissant un espace intérieur pour recevoir l'enceinte rigide.

10. Système selon la revendication 8 ou 9, dans lequel l'enceinte souple comprend au moins une paroi latérale, s'étendant d'une paroi inférieure, la paroi latérale entourant un espace pour recevoir l'enceinte rigide, dans lequel la paroi latérale est configurée pour arriver plus haut qu'un niveau d'un côté supérieur de l'enceinte rigide lorsque l'enceinte rigide est située dans l'enceinte souple.

11. Système selon l'une quelconque des revendications 8 à 10, dans lequel l'enceinte souple comporte un élément de recouvrement qui peut être déplacé d'une première position, où il recouvre l'intérieur de l'enceinte (5), à une deuxième position où il fournit un accès à l'intérieur de l'enceinte.

12. Système selon l'une quelconque des revendications 8 à 11, dans lequel l'enceinte souple est sensiblement souple, de sorte qu'elle peut être déformée dans une condition de stockage et/ou de transport sensiblement plate.

13. Système selon l'une quelconque des revendications 8 à 12, dans lequel l'enceinte souple comporte au moins un orifice d'entrée ayant une largeur ajustable, pour recevoir une dite ligne de communication.

14. Système selon l'une quelconque des revendications 8 à 13, dans lequel l'enceinte souple est sensiblement réalisée en un matériau perméable à l'eau.

15. Réseau de communication, comprenant un certain nombre de lignes de communication, en particulier de câbles de fibres optiques, qui sont sensiblement enfouies dans le sol, dans lequel le réseau comprend au moins un système selon l'une quelconque des revendications 8 à 14, le système étant enfoui dans le sol, avec au moins une connexion entre des lignes de communication située dans ladite enceinte rigide, l'enceinte rigide étant située dans l'enceinte souple.
